# FASCICULE DE BREVET EUROPEEN

(11) **EP 4 425 114 B1**
(45) Date de publication et mention de la délivrance du brevet: **02.07.2025**
(21) Numéro de dépôt: 24157884.8
(22) Date de dépôt: 15.02.2024
(51) Int. Cl.: G01F 15/12

(54) **FILTRE ANTI-POUSSIERE POUR COMPTEUR DE GAZ**
STAUBFILTER FÜR GASZÄHLER
DUST FILTER FOR GAS METER

(30) Priorité: 28.02.2023 FR 2301851
(43) Date de publication de la demande: 04.09.2024
(73) Titulaire: SAGEMCOM ENERGY & TELECOM SAS, 92270 Bois-Colombes (FR)
(72) Inventeur: SABRAOUI, Abbas, 92270 BOIS-COLOMBES (FR)
(74) Mandataire: Cabinet Boettcher

(56) Documents cités:
- WO-A1-2012/143669
- CN-A- 114 894 265
- FR-A1- 3 087 352
- GB-A- 2 283 925
- GB-A- 2 310 383
- GB-A- 2 490 176

## Description

L'invention concerne le domaine des compteurs de gaz, et notamment des compteurs de gaz monotubes à ultrasons.

### ARRIERE PLAN DE L'INVENTION

Un compteur de gaz comporte très classiquement un module de mesure destiné à mesurer un débit du gaz qui circule dans le compteur.

Or, il est connu que les gaz, dont on cherche à mesurer le débit en utilisant un tel compteur, transportent une quantité non négligeable de particules de poussières diverses.

Les mesures réalisées par le module de mesure d'un compteur de gaz peuvent être perturbées par la présence de ces particules de poussières. C'est en particulier le cas pour les modules de mesure ultrasoniques.

Il arrive ainsi fréquemment que des particules de poussières se déposent sur les transducteurs ultrasonores et sur les parois du conduit de mesure dans lequel circule le gaz et dans lequel les transducteurs émettent les signaux ultrasonores. Ce phénomène a pour effet de perturber le fonctionnement du module de mesure et d'affecter la précision des mesures métrologiques. L'erreur de mesure résultant de la présence de poussière peut aller jusqu'à 4 à 5 %.

On connaît une solution de l'art antérieur qui propose, pour pallier ce problème, d'intégrer le conduit de mesure dans une chambre élargie à l'intérieur du compteur, et de faire circuler le gaz dans la chambre élargie, avant de rentrer dans le conduit de mesure, en passant par un canal coudé. Les poussières tombent alors par gravité dans une zone de dépôt de poussière, située dans la chambre élargie à l'extérieur du conduit de mesure.

Cependant, comme la zone de dépôt de poussière est très proche de l'entrée du conduit de mesure, la poussière légère tend à être aspirée dans le conduit de mesure lorsque le débit de gaz est élevé, et risque alors de se déposer sur les transducteurs, et donc de perturber les mesures de débit réalisées par le module de mesure. Cette solution n'est donc pas satisfaisante. Le document WO 2012/143669 A1 divulgue un filtre anti-poussiére installé dans un compteur de gaz monotube.

### OBJET DE L'INVENTION

L'invention a pour objet d'améliorer la précision des mesures de débit de gaz réalisées par un compteur de gaz monotube, le gaz transportant des particules de poussières.

### RESUME DE L'INVENTION

En vue de la réalisation de ce but, on propose un filtre anti-poussière, agencé pour être installé dans un compteur de gaz monotube qui comprend un module de mesure agencé pour mesurer un débit d'un gaz, ainsi qu'un canal d'entrée qui s'étend en amont du module de mesure et un canal de sortie qui s'étend en aval du module de mesure, le canal d'entrée et le canal de sortie passant au travers d'un même premier plan, le filtre anti-poussière comprenant un média filtrant dans lequel un trou est pratiqué, une section du média filtrant et une section du trou, selon un deuxième plan perpendiculaire à une épaisseur du média filtrant, ayant respectivement pour formes une forme d'une section du canal d'entrée et une forme d'une section du canal de sortie selon le premier plan, le filtre anti-poussière étant ainsi agencé de sorte que, lorsqu'il est installé dans le compteur de manière à ce que le premier plan coïncide avec le deuxième plan, le gaz, avant d'entrer dans le module de mesure, passe dans le canal d'entrée au travers du média filtrant, et après être sorti du module de mesure, passe dans le canal de sortie au travers du trou.

Le filtre anti-poussière permet de filtrer les poussières présentes dans le gaz avant que celui-ci ne pénètre dans le module de mesure. La forme du filtre, qui est adaptée à la fois à la section du canal d'entrée et la section du canal de sortie, permet de l'intégrer à proximité de l'entrée/sortie de gaz dans le compteur et donc à distance du module de mesure. Les particules de poussière sont donc piégées au niveau d'une zone éloignée de l'entrée du module de mesure. On limite ainsi au maximum la pénétration de poussière dans le module de mesure, ce qui permet de garantir des performances métrologiques stables dans le temps. Optionnellement, le trou est positionné dans une portion centrale du média filtrant.

Optionnellement, le filtre comprend au moins une première armature de forme générale plate, qui est positionnée contre une première face du média filtrant en étant fixée à celui-ci.

Optionnellement, un contour de la première armature a une même forme qu'un contour du média filtrant, une largeur et une longueur du média filtrant étant supérieures à une largeur et une longueur de la première armature. Optionnellement, la première face est une face inférieure du média filtrant lorsque le filtre anti-poussière est installé dans le compteur, le filtre anti-poussière comprenant en outre un aimant positionné sur la première armature et agencé pour attirer des particules de poussières métalliques. Optionnellement, le filtre comprend au moins un premier capteur de pression qui est positionné sur la première armature.

Optionnellement, le filtre comprend une deuxième armature de forme générale plate, qui est positionnée contre une deuxième face du média filtrant en étant fixée à celui-ci, le filtre anti-poussière comprenant en outre au moins un deuxième capteur de pression qui est positionné sur la deuxième armature.

Optionnellement, le média filtrant a une forme générale plate et présente, lorsqu'il est vu de dessus ou de dessous, une forme carrée ou rectangulaire ayant des coins arrondis. Optionnellement, la première armature est fabriquée en polyoxyméthylène.

Optionnellement, le média filtrant est un média polyester.

L'invention concerne également un compteur de gaz monotube comprenant un module de mesure agencé pour mesurer un débit d'un gaz, ainsi qu'un canal d'entrée qui s'étend en amont du module de mesure et un canal de sortie qui s'étend en aval du module de mesure, le canal d'entrée et le canal de sortie passant au travers d'un même premier plan, le compteur comprenant en outre un filtre anti-poussière tel que précité, le filtre anti-poussière étant installé dans le compteur de sorte que le premier plan coïncide avec le deuxième plan. Optionnellement le premier plan est un plan horizontal. Optionnellement le compteur comporte une cuve comprenant une première chambre et une deuxième chambre, la première chambre étant une chambre supérieure et la deuxième chambre étant une chambre inférieure lorsque le compteur est installé dans une position nominale, le compteur comprenant de plus un dispositif de connexion comprenant une entrée de gaz et une sortie de gaz, l'entrée de gaz débouchant dans la première chambre, le module de mesure étant situé dans la deuxième chambre, le filtre anti-poussière séparant la première chambre et la deuxième chambre.

Optionnellement, le compteur comporte un embout de fixation agencé pour maintenir en position le filtre anti-poussière, le compteur comprenant de plus un conduit de liaison qui connecte fluidiquement la première chambre à la deuxième chambre, le filtre anti-poussière étant installé de sorte que le conduit de liaison s'étend au travers du trou, l'embout de fixation étant inséré dans le conduit de liaison et comprenant au moins un joint agencé pour éviter que du gaz non filtré ne passe depuis la première chambre vers la deuxième chambre par un chemin situé entre l'embout de fixation et le conduit de liaison.

Optionnellement, le compteur comprend en outre une enceinte de mélange de gaz, le conduit de liaison étant un conduit de sortie de l'enceinte de mélange de gaz.

Optionnellement le module de mesure comprend un conduit de mesure dans lequel circule le gaz, le conduit de mesure étant positionné verticalement lorsque le compteur est installé dans sa position nominale.

Optionnellement le module de mesure comprend un conduit de mesure dans lequel circule le gaz, le compteur comprenant de plus un conduit additionnel, ayant une forme et des dimensions semblables à celles du conduit de mesure, et étant disposé parallèlement au conduit de mesure, le conduit additionnel étant agencé de sorte qu'une portion du gaz qui circule dans la deuxième chambre vers la sortie de gaz, passe par le conduit additionnel, ce qui permet de réduire un débit de gaz circulant dans le conduit de mesure. Optionnellement le conduit de mesure et le conduit additionnel débouchent dans l'enceinte de mélange de gaz. Optionnellement, le compteur comprend un filtre anti-poussière, le compteur comprenant une unité de traitement agencée pour comparer avec un seuil de référence une différence de pression entre une première mesure de pression produite par le premier capteur de pression et une deuxième mesure de pression produite par le deuxième capteur de pression, et pour produire un message d'alarme si la différence de pression est supérieure audit seuil de référence.

L'invention sera mieux comprise à la lumière de la description qui suit de modes de mise en œuvre particuliers non limitatifs de l'invention.

### BREVE DESCRIPTION DES DESSINS

Il sera fait référence aux dessins annexés parmi lesquels :
[Fig. 1] la figure 1 est une vue en coupe, selon un plan vertical, d'un compteur de gaz monotube intégrant le filtre anti-poussière selon un premier mode de réalisation ;
[Fig. 2] la figure 2 est vue similaire à la figure 1 mais simplifiée, sur laquelle seuls le filtre, l'embout de fixation, l'enceinte de mélange, le module de mesure et le conduit additionnel sont représentés ;
[Fig. 3] la figure 3 est une vue en perspective et de dessus du filtre ;
[Fig. 4] la figure 4 est une vue en perspective et de dessus du filtre préalablement à son assemblage ;
[Fig. 5] la figure 5 est un graphique comprenant des courbes de l'erreur de mesure en fonction du débit du gaz ;
[Fig. 6] la figure 6 est une vue en perspective et de dessous du filtre anti-poussière selon un deuxième mode de réalisation ;

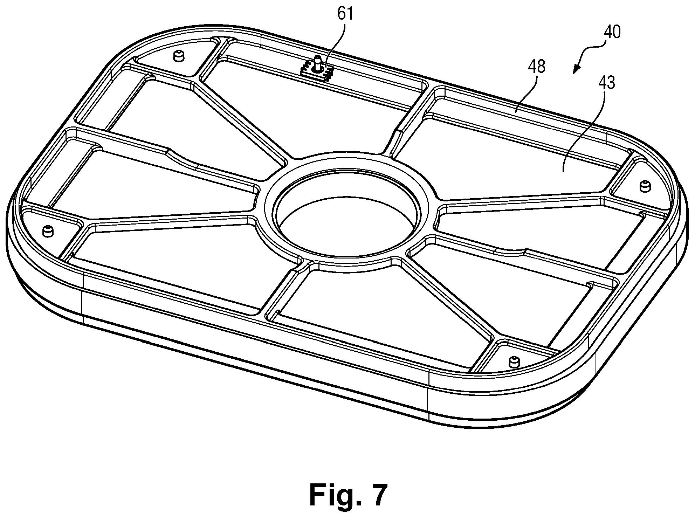

[Fig. 7] la figure 7 est une vue en perspective et de dessus du filtre anti-poussière selon un troisième mode de réalisation ;

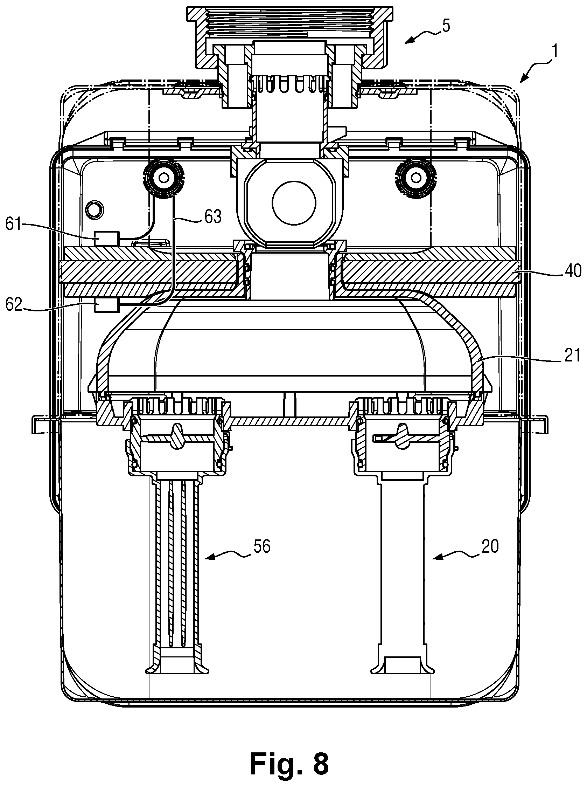

[Fig. 8] la figure 8 est une figure similaire à la figure 1, avec le filtre anti-poussière selon le troisième mode de réalisation.

### DESCRIPTION DETAILLEE DE L'INVENTION

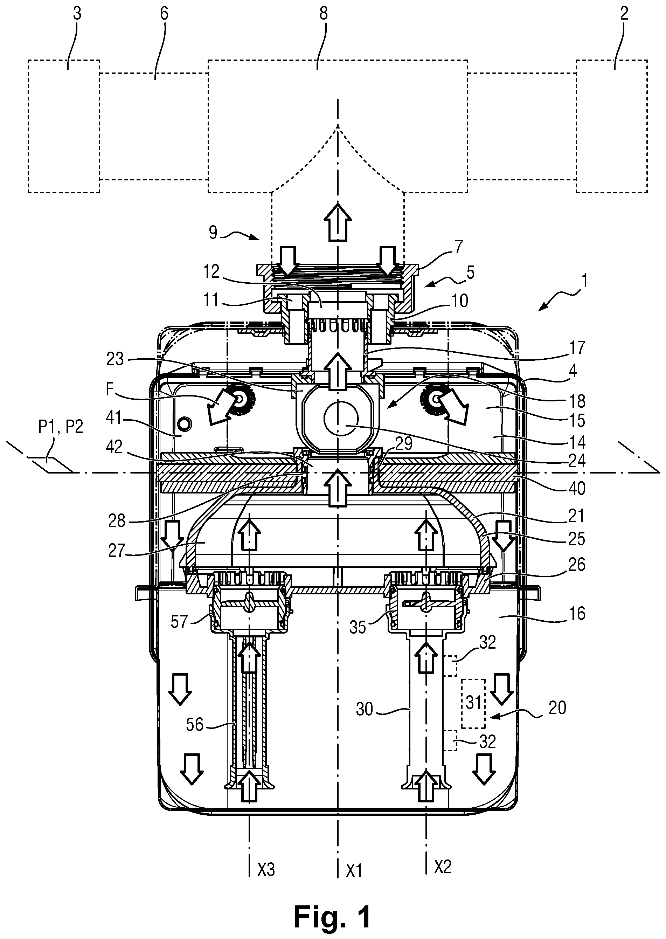

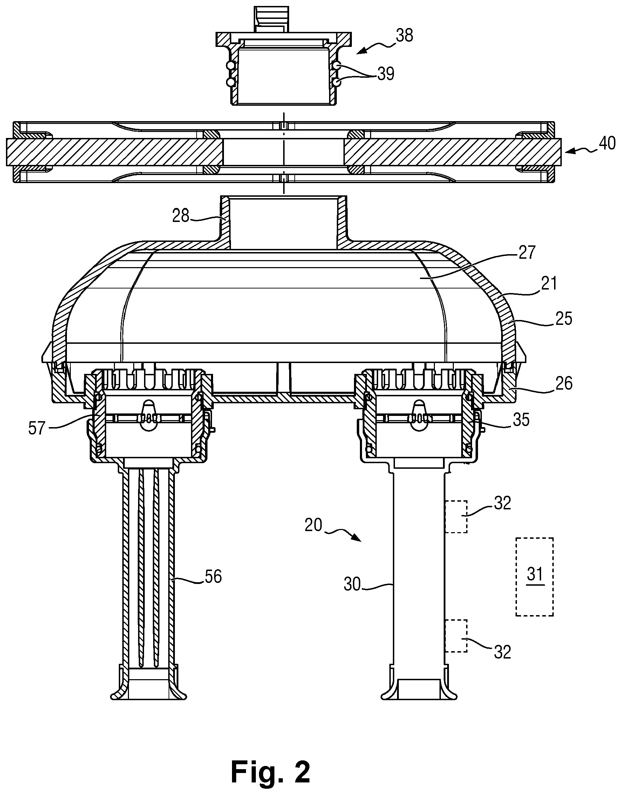

En référence aux figures 1 et 2, le compteur 1 est un compteur de gaz « intelligent » (*smart meter*), monotube, à ultrasons. Le compteur 1 est utilisé pour mesurer la consommation de gaz d'une installation 2. Le gaz est fourni à l'installation par un réseau de distribution 3.

Le compteur 1 comporte un boîtier 4 qui comprend un dispositif de connexion 5. Le dispositif de connexion 5 permet de raccorder au compteur 1 un tuyau 6 qui relie le réseau de distribution 3 à l'installation 2.

Le dispositif de connexion 5 comprend un connecteur fileté femelle 7.

Un raccord 8 (en T) relie entre elles deux portions du tuyau 6. Le raccord 8 comporte un port 9 qui comprend un connecteur fileté mâle (non représenté).

Le raccord 8 est connecté au compteur 1 via son port 9 et via le dispositif de connexion 5 du compteur 1.

Le dispositif de connexion 5 comporte de plus un embout de connexion 10 fixé au connecteur 7. L'embout de connexion 10 comprend une entrée de gaz, comprenant trois orifices d'entrée 11 qui sont des fentes formant des portions angulaires circulaires qui s'étendent à proximité d'une circonférence de l'embout de connexion 10, et une sortie de gaz, comprenant un orifice de sortie 12, qui est positionné au centre de l'embout de connexion 10.

Le gaz rentre dans le compteur 1 via les orifices d'entrée 11, et en ressort via l'orifice de sortie 12. Le cheminement du gaz est indiqué par les flèches F sur la figure 1.

La position du compteur 1 représentée sur les figures 1 et 2 est la position nominale du compteur 1, c'est-à-dire la position de fonctionnement qu'il occupe lorsqu'il est en service et positionné correctement. Le dispositif de connexion 5 est donc positionné au niveau d'une partie supérieure du boîtier 4 du compteur 1. Dans ce texte, à chaque fois que l'on emploie un terme de positionnement à propos d'un objet (supérieur, inférieur, etc.), on se réfère à la position nominale, en service, de cet objet.

Une cuve 14 est définie à l'intérieur du boîtier 4 du compteur 1. La cuve 14 comprend une première chambre 15 (supérieure) et une deuxième chambre 16 (inférieure).

L'entrée de gaz, c'est-à-dire les orifices d'entrée 11 de l'embout de connexion 10 du dispositif de connexion 5, débouche donc dans la première chambre 15.

Le compteur 1 comprend de plus un embout de liaison 17, situé dans la première chambre 15.

Le compteur 1 comprend optionnellement une vanne électromécanique 18 également située dans la première chambre 15. La vanne électromécanique 18 (optionnelle comme indiqué précédemment) est une vanne à bille qui comprend un conduit 23 et une bille 24 positionnée dans le conduit 23. La position angulaire de la bille 24 peut être commandée à distance, ce qui permet de couper, de limiter ou de rétablir le débit de gaz fourni à l'installation 2.

Le compteur 1 comprend en outre un module de mesure 20 et une enceinte de mélange de gaz 21, qui sont situés dans la deuxième chambre 16.

L'embout de liaison 17 a une extrémité insérée dans une extrémité du conduit 23, et une autre extrémité qui est fixée par emboîtage élastique à l'embout de connexion 10, de sorte que l'orifice de sortie 12 de l'embout de connexion 10 est en communication fluidique avec le conduit 23 de la vanne 18 via l'embout de liaison 17.

L'enceinte 21 comporte une portion supérieure 25 en forme de cloche, et une portion inférieure qui forme une base horizontale 26 de l'enceinte 21. Une chambre de mélange 27 est définie à l'intérieur de la portion supérieure 25. La portion supérieure 25 et la base horizontale 26 sont fixées l'une à l'autre par emboîtage élastique. La portion supérieure 25 de l'enceinte 21 comprend un conduit de sortie 28, qui est connecté au conduit 23 de la vanne 18.

Le connecteur 7, l'embout de connexion 10 (du dispositif de connexion 5), l'embout de liaison 17, la vanne 18, le conduit de sortie 28, la chambre de mélange 27 et la base 26 (de l'enceinte 21), sont positionnés successivement, de haut en bas, selon un axe vertical X1.

Le module de mesure 20 comporte un conduit de mesure 30, une unité de traitement 31 et deux transducteurs ultrasonores 32 (représentés schématiquement sur les figures 1 et 2 et dans des positions non représentatives de la réalité).

L'unité de traitement 31 est située en dehors de la cuve 14. Elle est intégrée dans une carte électronique du compteur 1, qui n'est pas nécessairement dédiée uniquement à la mesure de débit. L'unité de traitement 31 comprend au moins un composant de traitement (électronique et/ou logiciel), qui est par exemple un processeur « généraliste », un processeur spécialisé dans le traitement du signal (ou DSP, pour *Digital Signal Processor*), un microcontrôleur, ou bien un circuit logique programmable tel qu'un FPGA (pour *Field Programmable Gate Arrays*) ou un ASIC (pour *Application Specific Integrated Circuit*). L'unité de traitement 31 comprend aussi un générateur de signal d'excitation, et un récepteur de signaux.

Le module de mesure 20 fonctionne de la manière suivante. Chaque transducteur ultrasonore 32 joue successivement le rôle d'un émetteur et d'un récepteur. L'unité de traitement 31 génère un signal électrique d'excitation et l'applique aux bornes d'un transducteur émetteur. L'émetteur émet dans le conduit de mesure 30 un signal ultrasonore, qui est capturé par le récepteur après avoir parcouru un chemin de longueur prédéfinie dans le conduit de mesure 30. Puis, le transducteur récepteur devient à son tour émetteur et émet un signal ultrasonore, qui est capturé par l'autre transducteur après avoir parcouru le même chemin, en sens inverse.

L'unité de traitement 31 déduit des signaux reçus la vitesse du gaz et donc le débit du gaz.

Le conduit de mesure 30 comprend, au niveau de son extrémité de sortie du gaz, un embout de fixation 35 qui est fixé par emboîtage élastique à la base 26 de l'enveloppe 21. La sortie de conduit de mesure 30 débouche donc dans la chambre de mélange 27 via l'embout de fixation 35.

Le conduit de mesure 30 est positionné verticalement. Son axe longitudinal X2 est parallèle à l'axe X1, sans être confondu avec celui-ci.

La première chambre 15 et la deuxième chambre 16 sont séparées par un filtre anti-poussière 40.

La première chambre 15 et la deuxième chambre 16 sont en communication fluidique via le filtre 40 et via un conduit de liaison, qui est le conduit de sortie 28 de l'enceinte de mélange de gaz 21.

Le cheminement du gaz dans le compteur 1 est le suivant. Le gaz rentre dans le compteur 1 via les orifices d'entrée 11 de l'embout de connexion 10 du dispositif de connexion 5 et pénètre donc dans la première chambre 15.

Il traverse le filtre anti-poussière 40 puis pénètre dans la deuxième chambre 16. Il passe alors par le conduit de mesure 30 du module de mesure 20, et rentre dans la chambre de mélange 27, où il est remixé, de sorte qu'il ressort de la chambre de mélange 27 en étant homogène. Il passe alors par le conduit de sortie 28 de l'enveloppe 21, par le conduit 23 de la vanne 18, par l'embout de liaison 17, puis par l'orifice de sortie 12 de l'embout de connexion 10 du dispositif de connexion 5 du compteur 1.

Le compteur 1 comprend un canal d'entrée 41, qui s'étend en amont du module de mesure 20 et par lequel passe le gaz avant d'entrer dans le conduit de mesure 30, et un canal de sortie 42, qui s'étend en aval du module de mesure 20 et par lequel passe le gaz après être sorti du conduit de mesure 30. Ici, les termes « amont » et « aval » sont définis par rapport au sens de circulation du gaz dans le compteur 1.

Le canal d'entrée 41 et le canal de sortie 42 passent au travers d'un même premier plan P1. Le premier plan P1 est ici un plan horizontal, qui est perpendiculaire à une direction de circulation du gaz dans le compteur 1.

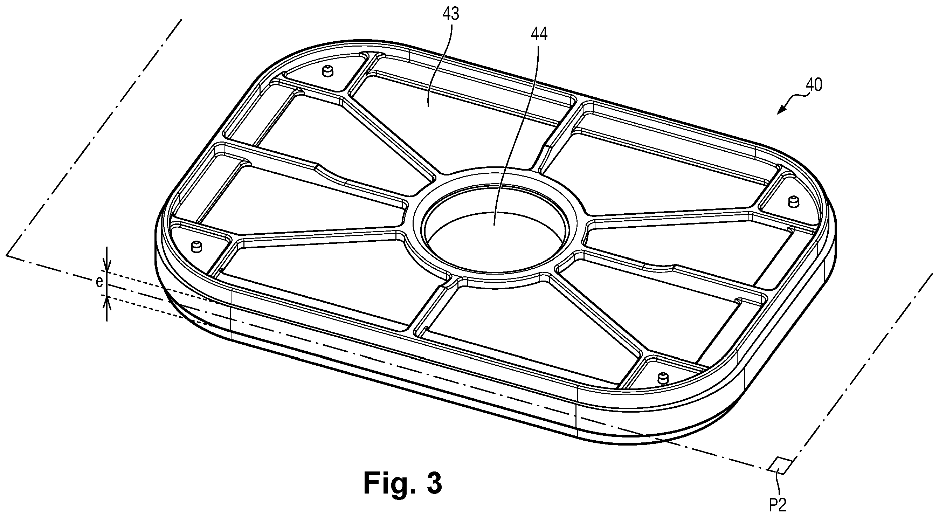

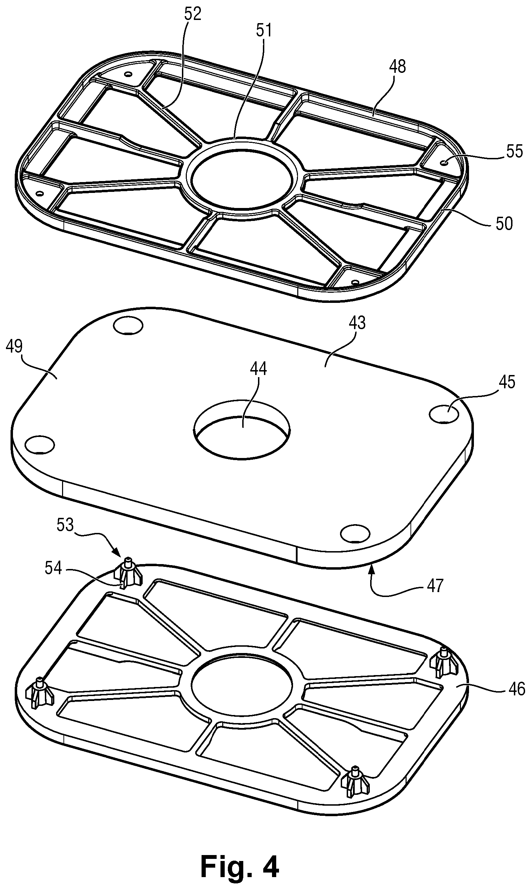

En référence aux figures 3 et 4, le filtre anti-poussière 40 comprend un média filtrant 43, dans lequel un trou principal 44 est pratiqué.

Le média filtrant 43 a ici une forme générale plate. Par ce terme, on entend que son épaisseur est nettement inférieure à sa longueur et à sa largeur (par exemple au moins 5 fois inférieure).

Une section du média filtrant 43 et une section du trou principal 44, selon un deuxième plan P2 perpendiculaire à une épaisseur e du média filtrant 43, ont respectivement pour formes une forme d'une section du canal d'entrée 41 et une forme d'une section du canal de sortie 42 selon le premier plan P1.

Le filtre anti-poussière 40 est ainsi agencé de sorte que, lorsqu'il est installé dans le compteur 1 de manière à ce que le premier plan P1 coïncide avec le deuxième plan P2, le gaz, avant d'entrer dans le conduit de mesure 30 du module de mesure 20, passe dans le canal d'entrée 41 au travers du média filtrant 43, et après être sorti du conduit de mesure 30 du module de mesure 20, passe dans le canal de sortie 42 au travers du trou principal 44.

La section du canal d'entrée est ici la section de la première chambre 15. La section du canal de sortie 42 est ici la section du conduit de sortie 28 de l'enveloppe 21.

On note que le compteur 1 comprend de plus un embout de fixation 38 de forme cylindrique qui est inséré dans le conduit de sortie de l'enveloppe 21. L'embout de fixation 38 permet de maintenir en position le filtre 40 dans le compteur 1. Deux joints d'étanchéité 39 (ici des joints toriques de type *O'Ring*) sont positionnés dans des gorges pratiqués sur l'embout de fixation 38.

Au moment de l'assemblage du compteur 1, le filtre 40 est positionné de sorte que le conduit de sortie 28 s'étend au travers du trou principal 44 du filtre 40. Le filtre 40 est alors posé sur la portion supérieure 25 de l'enceinte 21. L'embout de fixation 38 est alors inséré dans le conduit de sortie 28. L'embout de fixation 38 comprend une extrémité élargie qui vient appuyer contre le filtre 40 de sorte que celui-ci est maintenu immobile entre l'extrémité élargie de l'embout de fixation 38 et la portion supérieure 25 de l'enceinte 21.

Les joints 39 de l'embout de fixation 38 permettent de rendre étanche l'interface entre l'embout de fixation 38 et le conduit de sortie 28, ce qui permet de garantir une séparation entre le gaz entrant et le gaz sortant, et d'éviter que du gaz non filtré ne passe depuis la première chambre 15 vers la deuxième chambre 16 par un chemin situé entre l'embout de fixation 38 et le conduit de sortie 28.

Le média filtrant 43, lorsqu'il est vu de dessus ou de dessous, présente une forme carrée ou rectangulaire (ici rectangulaire) aux coins arrondis.

Le trou principal 44 est positionné au niveau d'une portion centrale du média filtrant. Ici, le centre du trou 44 est au centre du média filtrant 43.

Le média filtrant 43 comprend de plus quatre trous de fixation 45, chacun étant positionné dans l'un des coins du média filtrant 43.

Le filtre 40 comprend en outre au moins une première armature 46 de forme générale plate, qui est positionnée contre une première face 47 du média filtrant 43 en étant fixée à celui-ci. Le filtre 40 comporte ici en plus une deuxième armature 48 de forme générale plate, qui est positionnée contre une deuxième face 49 du média filtrant 43 en étant fixée à celui-ci.

Ici, lorsque le filtre 40 est installé dans le compteur 1, la première face 47 du média filtrant 43 est une face inférieure et la deuxième face 49 est une face supérieure.

Le média filtrant 43, la première armature 46 et la deuxième armature 48 forment ainsi, lorsque le filtre 40 est assemblé, trois couches empilées en « sandwich », le média filtrant 43 étant positionné entre la première armature 46 et la deuxième armature 48.

Chaque armature 46, 48 comprend une bordure 50, une portion centrale 51 de forme circulaire, et des branches 52 qui relient la bordure 50 à la portion centrale 51. La surface restante de chaque armature 46, 48 est évidée. L'évidement accroît la surface filtrante par laquelle passe le gaz, et donc l'efficacité du filtrage.

Tout comme le média filtrant 43, la bordure 50 de chaque armature a la forme d'un rectangle aux coins arrondis. Les bords de la bordure sont évidés dans leur épaisseur.

La bordure 50 de chaque armature 46, 48 a la même forme que le contour du média filtrant 43, mais la largeur et la longueur du média filtrant 43 sont légèrement supérieures à celles de ladite bordure, typiquement de 1 à 5 mm.

Lorsque le filtre 40 est assemblé, la portion centrale 51 de chaque armature 46, 48 coïncide à peu près avec la circonférence du trou principal 44 du média filtrant 43, mais le trou principal 44 a un diamètre légèrement inférieur à celui de chaque portion centrale 51, typiquement de 1 à 5 mm.

Chaque armature 46, 48 comprend huit branches 52 : quatre branches 52 relient les quatre coins de la bordure 50 à la portion centrale 51 (dans chaque coin, l'angle entre une branche 52 et chaque bord formant le coin est égal à 45°), et quatre branches 52 relient les milieux des quatre bords de l'armature à la portion centrale 51 (chacune de ces branches s'étendant perpendiculairement depuis le bord en question).

Les portions des bords de la bordure 50, situées entre les coins et les points d'où s'étendent les branches 52, sont évidées dans leur épaisseur.

La première armature 46 comprend quatre pions 53 situés dans les coins de la bordure 50 de ladite première armature 46. L'extrémité libre de chaque pion 53 est légèrement élargie. Chaque pion 53 comporte des ailettes radiales 54 ayant une extrémité libre inclinées vers l'extrémité libre du pion 53.

La deuxième armature 48 comprend quatre trous 55 situés dans les coins de ladite deuxième armature 48.

Le filtre 40 est assemblé de la manière suivante. La première armature 46 est positionnée contre la première face 47 du média filtrant 3, de sorte que les pions 53 passent dans les trous de fixation 45 du média filtrant 43. La forme des ailettes 54 facilite l'insertion et le passage des pions 53. Puis, La deuxième armature 48 est positionnée contre la deuxième face 49 du média filtrant 43. Les pions 53 de la première armature 46 pénètrent dans les trous 55 de la deuxième armature. L'insertion des extrémités élargies des pions 53 dans les trous 55 permet de fixer la première armature 46 et la deuxième armature entre elles par emboîtage élastique.

Les armatures 46, 48 permettent de rigidifier le filtre 40 et d'éviter que le média filtrant 43 ne gondole ou ne forme des creux sous l'effet du gaz qui le traverse.

L'assemblage du filtre 40, utilisant les pions 53 et les trous 45, 55, est facile, rapide, et ne nécessite aucune machine d'assemblage complexe.

Les dimensions (largeur et longueur) des armatures 46, 48 sont normalement égales à celles de la section de la première chambre 15 du compteur 1 selon le plan P1 (à un jeu de montage près), de sorte que lorsque le filtre 40 est positionné dans le compteur 1, les bordures 50 des armatures 46, 48 sont en contact avec les parois internes de la cuve 14 du compteur (au jeu de montage près).

Le fait que les dimensions du média filtrant 43 en longueur et en largeur soient légèrement supérieures à celles des armatures 46, 48 permet de compenser les tolérances mécaniques qui pourraient créer des passages pour la poussière. Le média filtrant 43 est compressé contre les parois internes de la cuve 14, ce qui forme un joint empêchant tout passage de gaz entre les parois de la cuve 14 et le filtre 40.

De même, le fait que le trou principal 44 ait un diamètre légèrement inférieur à celui de chaque portion centrale 51 permet de compresser le média filtrant contre le conduit de sortie 28, ce qui forme un joint empêchant tout passage de gaz entre le conduit de sortie 28 et le filtre 40.

Les armatures 46, 48 sont ici fabriquées en polyoxyméthylène (ou « POM »), qui est un thermoplastique semi-cristallin. D'autres types de plastique pourraient être utilisés mais le POM présente plusieurs avantages qui le rendent parfaitement adapté à l'utilisation dans un compteur de gaz. Le POM présente par exemple :
- une bonne stabilité dimensionnelle en fonction de la température ;
- une bonne résistance aux produits chimiques agressifs (par exemple à l'ammoniaque et au soufre) ;
- une résistance élevée à la fatigue et à l'usure ;
- une facilité de moulage : le POM est facile à mouler, ce qui en fait un matériau idéal pour les pièces mécaniques de précision.

On s'intéresse maintenant au choix du matériau formant le média filtrant 43.

Le média filtrant 43 est ici un filtre média synthétique.

Les avantage du filtre média synthétique sont :
- une grande résistance à l'abrasion et à la déchirure ;
- une forte capacité de rétention de particules, qui peut être ajustée en fonction des besoins spécifiques ;
- il peut être utilisé dans des conditions de température et de pression extrêmes ;
- il présente une faible résistance à l'air, ce qui permet un débit d'air élevé et une faible perte de charge ;
- ce type de média filtrant est résistant à la plupart des produits chimiques et des agents corrosifs.

Bien évidemment, les performances du média filtrant 43 vont dépendre de plusieurs paramètres comme :
- son épaisseur : de quelques mm à quelques cm ;
- la taille des pores : il est important de choisir un filtre avec une taille des pores suffisamment petite pour retenir les particules de poussière métallique. Le média filtrant a ici des pores de taille inférieure à la taille des particules à filtrer, c'est-à-dire de taille inférieure à 400 µm (le diamètre des particules de poussière métallique présentes dans le gaz varie entre 0,1 µm et 400 µm) ;
- la rétention de particules : il est également important de choisir un filtre ayant une forte capacité de rétention de particules pour retenir efficacement les poussières métalliques (exemple : 400 g/m2) ;
- la perte de charge en fonction du débit : il est important de choisir un filtre ayant une faible résistance à l'air pour éviter des chutes de pression du gaz chez le consommateur final (exemple : 0,0002 mbar/m3).

Le média filtrant choisi est ici un média filtrant synthétique ayant les caractéristiques suivantes :
- épaisseur : 8 mm ;
- composition : fibres 100 polyester ;
- classe : G3 ou G4 ;
- capacité de rétention de poussière : 400 g/m2 ;
- stabilité thermique : 100°C ;
- perte de charge initiale : 0,0002 bar/m3.

La classe G3 est une norme européenne utilisée pour classer les filtres à air selon leur capacité de filtrage. Elle indique que le filtre a une efficacité de filtrage minimale de 50% pour les particules de 0,3 à 1 micron. Cela signifie que si 100% des particules de cette taille sont présentes dans l'air, au moins 50% seront retenues par le filtre.

La classe G4 est une norme européenne utilisée pour classer les filtres à air selon leur capacité de filtrage. Elle indique que le filtre a une efficacité de filtrage minimale de 85% pour les particules de 0,3 à 1 micron. Cela signifie que si 100% des particules de cette taille sont présentes dans l'air, au moins 85% seront retenues par le filtre.

On s'intéresse maintenant à l'évaluation des performances du filtre 40 qui a été décrit et de son intégration dans le compteur de gaz 1.

Comme on l'a vu, l'inconvénient principal de la présence de poussière est la dégradation de la précision de la mesure du débit de gaz.

On a réalisé dans un laboratoire certifié un test normatif de résistance à la poussière pour évaluer les performances du filtre 40. Ce test consiste à mesurer la précision du compteur 1 en présence de 20 grammes de poussière (exigence normative).

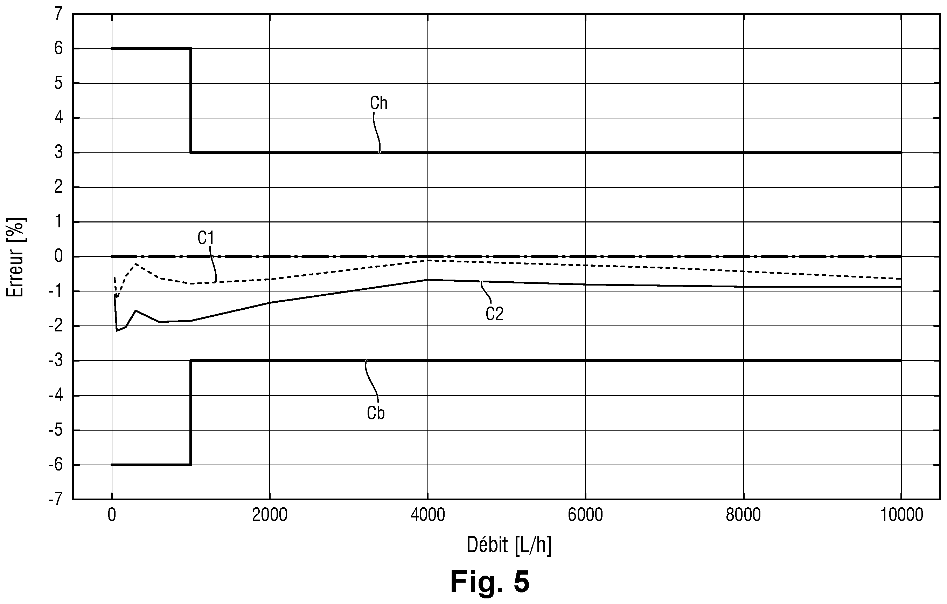

Les résultats obtenus sont visibles sur la figure 5.

Pour que le test soit réussi, la courbe de l'erreur en fonction du débit doit demeurer à l'intérieur d'un gabarit métrologique défini par une courbe limite haute Ch et une courbe limite basse Cb.

La courbe C1 représente l'évolution de l'erreur en fonction du débit avant le test normatif de résistance à la poussière, c'est-à-dire avant l'introduction de la poussière.

La courbe C2 représente l'évolution de l'erreur en fonction du débit après l'introduction de la poussière. On voit que la précision a été très légèrement dégradée par le test. L'erreur métrologique est dégradée en moyenne de 0,7% mais reste dans le gabarit métrologique et est donc conforme à la norme.

On a aussi vérifié que la présence du filtre 40 ne provoque pas une perte de charge inacceptable.

En effet, selon la norme EN 14236, le compteur doit avoir une perte de charge inférieure à 2 mbar au débit maximal. La norme EN 14236 est une norme européenne qui définit les exigences pour les compteurs de gaz à ultrasons. Elle couvre les exigences de performance, les exigences de sécurité, les exigences de fiabilité et les exigences de compatibilité électromagnétique pour les compteurs de gaz à ultrasons. Les exigences de performance incluent la précision de mesure, la stabilité de mesure, la température de fonctionnement, la pression de fonctionnement, la compatibilité électromagnétique, la résistance à la poussière, et les exigences en matière de sécurité incluent les exigences liées à la sécurité électrique et à la sécurité incendie.

On rappelle que les compteurs de type G6 ont un débit minimal de 0,06 m³/h et un débit maximal de 10 m³/h. Les compteurs de type G4 ont un débit minimal de 0,04 m³/h et un débit maximal de 6 m³/h. Les compteurs G6 sont adaptés pour des consommations de gaz plus élevées que les compteurs G4.

La perte de charge peut augmenter après le test normatif de « résistance à la poussière » mais il doit rester inférieur à 2,2 mbar au débit maximal.

La perte de charge de référence à Qmax (débit maximal) est de : 1,1 mbar

La perte de charge après le test « résistance à la poussière » à Qmax (débit maximale) est de : 1,15 mbar.

On note que l'écart entre les deux pertes de charge est négligeable ce qui prouve que le concept est validé et que le filtre 40 n'est pas encrassé.

On revient aux figures 1 et 2. On voit que le compteur 1 comprend un conduit additionnel 56. Le conduit additionnel 56 est une réplique géométrique du conduit de mesure 30 du module de mesure 20 : il a une forme et des dimensions semblables à celles du conduit de mesure 30, mais il n'est pas équipé d'électronique pour effectuer des mesures.

Le conduit additionnel 56 comprend aussi un embout de fixation 57 (semblable à l'embout 35) qui est fixé par emboitage élastique à la base 26 de l'enceinte de mélange 21, de sorte que la sortie du conduit additionnel 56 débouche dans la chambre de mélange 27.

Le conduit additionnel 56 est disposé parallèlement au conduit de mesure 30 : son axe longitudinal X3 est parallèle à l'axe X1, sans être confondu avec celui-ci. Les axes X1, X2, X3 sont parallèles et les axes X2 et X3 sont situés de part et d'autre de l'axe X1 à égale distance de celui-ci.

Le conduit additionnel 56 est ainsi agencé de sorte qu'une portion du gaz qui circule dans la deuxième chambre 16 vers la sortie de gaz, passe par le conduit additionnel 56, ce qui permet de réduire un débit de gaz circulant dans le conduit de mesure 30 du module de mesure 20.

Le volume qui passe dans le conduit de mesure 30 est identique (normalement) au volume qui traverse le conduit additionnel 56 (car même géométrie, même hydraulique des conduits). Le volume total de gaz passant au travers du compteur 1 est donc égal au double du volume passant au travers du conduit de mesure 30 du module de mesure 20. Ce système permet d'éviter la saturation des mesures du module de mesure 20 en divisant le débit le traversant par deux. On multiplie ainsi la dynamique de mesure par deux.

On note qu'il serait possible d'utiliser non pas un mais plusieurs conduits additionnels 56, pour répliquer plusieurs fois le conduit de mesure 30, ce qui permet de diviser le débit de manière plus importante.

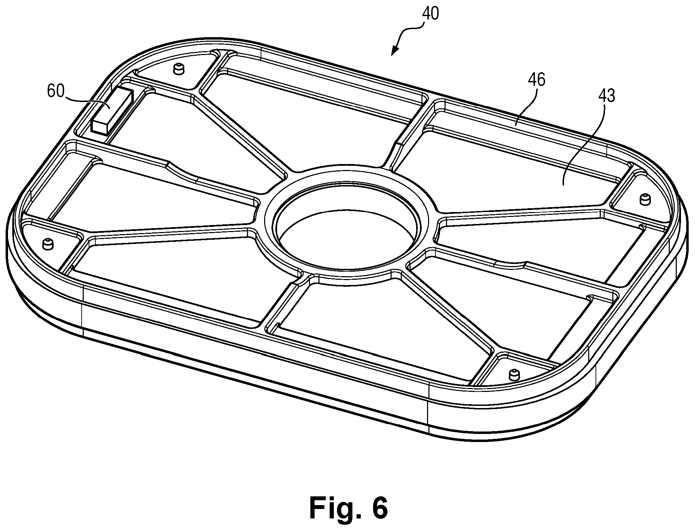

Dans un deuxième mode de réalisation, en référence à la figure 6, le filtre 40 comprend un ou plusieurs aimants.

Ici, le filtre 40 comprend un seul aimant 60 qui est positionné sur la première armature 46, en étant collée à une face externe de celle-ci (qui n'est pas en regard du média filtrant 43), c'est-à-dire à la face dirigée vers le bas lorsque le filtre 40 est installé dans le compteur. Tout moyen de fixation peut être utilisé pour fixer le ou les aimants 60 à la ou aux armatures.

L'ajout d'un ou de plusieurs aimants 60 sur la première armature 46 augmente les performances du filtre en augmentant la force de retenue des particules de poussière. Les aimants 60 créent un champ magnétique qui attire les particules de poussières métalliques, telles que les particules de fer (sachant que 92% de la poussière utilisée pour les tests de certification dans un compteur de gaz sont des particules de fer) .

Ces particules de poussière sont alors piégées par le filtre 40, ce qui augmente son efficacité de filtrage. Le ou les aimants 60 peuvent également aider à diminuer la perte de charge due à l'accumulation de particules de poussière sur le filtre 40, ce qui peut également améliorer les performances du filtre 40.

Dans un troisième mode de réalisation, le filtre 40 comporte au moins un capteur de pression qui mesure une pression du gaz dans la cuve 14 du compteur 1.

Ici, le filtre 40 est équipé de deux capteurs de pression 61, 62 qui sont fixés aux armatures, par exemple par collage (ou par tout autre moyen de fixation). Le premier capteur de pression 61 est positionné sur la face inférieure (face externe) de la première armature 46. Le deuxième capteur de pression 62 est positionné sur la face supérieure (face externe) de la deuxième armature 48.

Au vu de la faible pression à mesurer, on utilise ici par exemple des capteurs de pression de type MEMS, et par exemple le modèle « *MCD70D* »*,* qui présente les caractéristiques suivantes :
- plage de pression : 0 à 68,9 mbar ;
- tension d'alimentation : 3 à 5,5 Volts ;
- sortie : analogique ou bus I2C ;
- précision : ± 2% de la pleine échelle ;
- humidité : < 95% ;
- température de fonctionnement : -20 à 70°C.

Les capteurs de pression 61, 62 sont connectés à l'unité de traitement 31 du compteur 1 (qui se trouve en dehors de la cuve 14).

Les capteurs de pression 61, 62 permettent de mesurer l'évolution de la perte de charge.

Durant la calibration du compteur 1, à la fin de sa fabrication, on acquiert une première mesure de pression P1 réalisée par le premier capteur de pression 61 et une deuxième mesure de pression P2 réalisée par le deuxième capteur de pression 62 et ce, pour plusieurs valeurs de débit. On calcule alors la perte de charge (ΔP : P1-P2) correspondante pour chaque valeur de débit.

Ces valeurs de perte de charge ΔP seront utilisées comme référence pour pouvoir suivre l'évolution de la perte de charge durant la vie du compteur 1.

À titre d'exemple, la perte de charge de référence ΔP0 à 10000 l/h, mesurée durant la calibration du compteur 1, est par exemple égale 1 mbar.

Si le filtre s'encrasse avec le temps, cette perte de charge va donc augmenter et risque de dépasser un seuil de référence (exemple : ΔP = 2 mbar)
Cette information pourra être utilisée pour alerter le client sur la qualité de son réseau et sur le risque d'encrassement et de chute de pression dans le compteur 1.

L'unité de traitement 31 compare avec un seuil de référence une différence de pression entre une première mesure de pression produite par le premier capteur de pression 61 et une deuxième mesure de pression produite par le deuxième capteur de pression 62, et produit un message d'alarme si la différence de pression est supérieure audit seuil de référence.

Les fils 63 permettent de relier les capteurs de pression 61, 62 à l'unité de traitement 31.

Bien entendu, l'invention n'est pas limitée aux modes de réalisation décrits mais englobe toute variante entrant dans le champ de l'invention tel que défini par les revendications.

Le filtre pourrait être positionné de manière différente dans le compteur. Le plan P1 n'est pas nécessairement un plan horizontal. La portion du canal de sortie qui s'étend au travers du trou principal n'est pas nécessairement le conduit de sortie d'une enceinte de mélange.

La forme du filtre pourrait être différente. Le filtre pourrait comprendre une seule armature. Les matériaux utilisés pour le média filtrant et les armatures peuvent être différents de ceux décrits ici. Le filtre pourrait comporter à la fois un ou des aimants et un ou des capteurs de pression.

## Revendications

1. Filtre anti-poussière (40), agencé pour être installé dans un compteur de gaz monotube (1) qui comprend un module de mesure (20) agencé pour mesurer un débit d'un gaz, ainsi qu'un canal d'entrée (41) qui s'étend en amont du module de mesure et un canal de sortie (42) qui s'étend en aval du module de mesure, le canal d'entrée et le canal de sortie passant au travers d'un même premier plan (P1),
le filtre anti-poussière comprenant un média filtrant (43) dans lequel un trou (44) est pratiqué, une section du média filtrant et une section du trou, selon un deuxième plan (P2) perpendiculaire à une épaisseur (e) du média filtrant, ayant respectivement pour formes une forme d'une section du canal d'entrée et une forme d'une section du canal de sortie selon le premier plan,
le filtre anti-poussière (40) étant ainsi agencé de sorte que, lorsqu'il est installé dans le compteur (1) de manière à ce que le premier plan coïncide avec le deuxième plan, le gaz, avant d'entrer dans le module de mesure, passe dans le canal d'entrée au travers du média filtrant, et après être sorti du module de mesure, passe dans le canal de sortie au travers du trou,
le filtre anti-poussière comprenant en outre au moins une première armature (46) de forme générale plate, qui est positionnée contre une première face (47) du média filtrant en étant fixée à celui-ci,
la première face (47) étant une face inférieure du média filtrant (43) lorsque le filtre anti-poussière (40) est installé dans le compteur,
**caractérisé en ce que** le filtre anti-poussière comprend en outre un aimant (60) positionné sur la première armature et agencé pour attirer des particules de poussières métalliques.

2. Filtre anti-poussière selon la revendication 1, dans lequel le trou (44) est positionné dans une portion centrale du média filtrant (43).

3. Filtre anti-poussière selon l'une des revendications précédentes, dans lequel un contour de la première armature (46) a une même forme qu'un contour du média filtrant (43), une largeur et une longueur du média filtrant étant supérieures à une largeur et une longueur de la première armature.

4. Filtre anti-poussière selon l'une des revendications précédentes, comprenant au moins un premier capteur de pression (61) qui est positionné sur la première armature (46).

5. Filtre anti-poussière selon la revendication 4, comprenant en outre une deuxième armature (48) de forme générale plate, qui est positionnée contre une deuxième face (49) du média filtrant en étant fixée à celui-ci, le filtre anti-poussière comprenant en outre au moins un deuxième capteur de pression (62) qui est positionné sur la deuxième armature (48).

6. Filtre anti-poussière selon l'une des revendications précédentes, le média filtrant (43) ayant une forme générale plate et présente, lorsqu'il est vu de dessus ou de dessous, une forme carrée ou rectangulaire ayant des coins arrondis.

7. Filtre anti-poussière selon l'une des revendications précédentes, la première armature étant fabriquée en polyoxyméthylène.

8. Filtre anti-poussière selon l'une des revendications précédentes, le média filtrant étant un média polyester.

9. Compteur de gaz monotube (1) comprenant un module de mesure (20) agencé pour mesurer un débit d'un gaz, ainsi qu'un canal d'entrée (41) qui s'étend en amont du module de mesure et un canal de sortie (42) qui s'étend en aval du module de mesure, le canal d'entrée et le canal de sortie passant au travers d'un même premier plan (P1), le compteur comprenant en outre un filtre anti-poussière (40) selon l'une des revendications précédentes, le filtre anti-poussière étant installé dans le compteur de sorte que le premier plan coïncide avec le deuxième plan.

10. Compteur selon la revendication 9, le premier plan (P1) étant un plan horizontal.

11. Compteur selon l'une des revendications 9 ou 10, le compteur comportant une cuve (14) comprenant une première chambre (15) et une deuxième chambre (16), la première chambre étant une chambre supérieure et la deuxième chambre étant une chambre inférieure lorsque le compteur est installé dans une position nominale, le compteur comprenant de plus un dispositif de connexion (5) comprenant une entrée de gaz et une sortie de gaz, l'entrée de gaz débouchant dans la première chambre (15), le module de mesure (20) étant situé dans la deuxième chambre, le filtre anti-poussière (40) séparant la première chambre et la deuxième chambre.

12. Compteur selon la revendication 11, comprenant en outre un embout de fixation (38) agencé pour maintenir en position le filtre anti-poussière (40), le compteur comprenant de plus un conduit de liaison (28) qui connecte fluidiquement la première chambre (15) à la deuxième chambre (16), le filtre anti-poussière étant installé de sorte que le conduit de liaison s'étend au travers du trou (44), l'embout de fixation étant inséré dans le conduit de liaison et comprenant au moins un joint (39) agencé pour éviter que du gaz non filtré ne passe depuis la première chambre (15) vers la deuxième chambre (16) par un chemin situé entre l'embout de fixation et le conduit de liaison.

13. Compteur selon la revendication 12, le compteur comprenant en outre une enceinte de mélange de gaz (21), le conduit de liaison étant un conduit de sortie de l'enceinte de mélange de gaz (21).

14. Compteur selon l'une des revendications 9 à 13, dans lequel le module de mesure (20) comprend un conduit de mesure (30) dans lequel circule le gaz, le conduit de mesure étant positionné verticalement lorsque le compteur est installé dans sa position nominale.

15. Compteur selon l'une des revendications 9 à 14, dans lequel le module de mesure (20) comprend un conduit de mesure (30) dans lequel circule le gaz, le compteur comprenant de plus un conduit additionnel (56), ayant une forme et des dimensions semblables à celles du conduit de mesure (30), et étant disposé parallèlement au conduit de mesure, le conduit additionnel (56) étant agencé de sorte qu'une portion du gaz qui circule dans la deuxième chambre (16) vers la sortie de gaz, passe par le conduit additionnel, ce qui permet de réduire un débit de gaz circulant dans le conduit de mesure.

16. Compteur selon les revendications 13 et 15, dans lequel le conduit de mesure et le conduit additionnel débouchent dans l'enceinte de mélange de gaz (21).

17. Compteur selon l'une des revendications 9 à 16, comprenant un filtre anti-poussière (40) selon la revendication 7, le compteur comprenant une unité de traitement (31) agencée pour comparer avec un seuil de référence une différence de pression entre une première mesure de pression produite par le premier capteur de pression (61) et une deuxième mesure de pression produite par le deuxième capteur de pression (62), et pour produire un message d'alarme si la différence de pression est supérieure audit seuil de référence.

## Patentansprüche

1. Staubfilter (40), der dafür ausgelegt ist, in einen Einrohrgaszähler (1) eingebaut zu werden, welcher ein Messmodul (20) zur Durchflussmessung eines Gases sowie einen sich stromaufwärts des Messmoduls erstreckenden Einlasskanal (41) und einen sich stromabwärts des Messmoduls erstreckenden Auslasskanal (42) umfasst, wobei sich der Einlasskanal und der Auslasskanal durch ein und dieselbe erste Ebene (P1) hindurch erstrecken, wobei der Staubfilter ein Filtermedium (43) umfasst, in welchem eine Öffnung (44) ausgebildet ist, wobei ein Querschnitt des Filtermediums und ein Querschnitt der Öffnung, in einer zweiten Ebene (P2) senkrecht zu einer Dicke (e) des Filtermediums betrachtet, derart ausgebildet sind, dass sie jeweils die Form eines Einlasskanal-Querschnitts bzw. die Form eines Auslasskanal-Querschnitts gemäß der ersten Ebene aufweisen,
wobei der Staubfilter (40) somit dafür ausgelegt ist, dass, wenn er derart in dem Zähler (1) eingebaut ist, dass die erste Ebene mit der zweiten Ebene zusammenfällt, das Gas vor seinem Eintreten in das Messmodul im Einlasskanal durch das Filtermedium hindurchtritt und, nach seinem Austreten aus dem Messmodul, im Auslasskanal durch die Öffnung hindurch austritt,
wobei der Staubfilter ferner zumindest eine im Allgemeinen flachförmige erste Armatur (46) umfasst, die gegen eine erste Seite (47) des Filtermediums positioniert und an diesem befestigt ist;
wobei es sich bei der ersten Seite (47) um eine Unterseite des Filtermediums (43) handelt, wenn der Staubfilter (40) in dem Zähler eingebaut ist, **dadurch gekennzeichnet, dass** der Staubfilter ferner einen auf der ersten Armatur positionierten Magneten (60) umfasst, der dafür ausgelegt ist, metallische Staubpartikel anzuziehen.

2. Staubfilter nach Anspruch 1, wobei die Öffnung (44) in einem Mittelteil des Filtermediums (43) positioniert ist.

3. Staubfilter nach einem der vorhergehenden Ansprüche, wobei eine Umrisslinie der ersten Armatur (46) dieselbe Form wie eine Umrisslinie des Filtermediums (43) aufweist, wobei eine Breite und eine Länge des Filtermediums größer sind als eine Breite und eine Länge der ersten Armatur.

4. Staubfilter nach einem der vorhergehenden Ansprüche, umfassend zumindest einen ersten Drucksensor (61), der auf der ersten Armatur (46) positioniert ist.

5. Staubfilter nach Anspruch 4, ferner umfassend eine im Allgemeinen flachförmige zweite Armatur (48), die gegen eine zweite Seite (49) des Filtermediums positioniert und an diesem befestigt ist, wobei der Staubfilter ferner zumindest einen zweiten Drucksensor (62) umfasst, der auf der zweiten Armatur (48) positioniert ist.

6. Staubfilter nach einem der vorhergehenden Ansprüche, wobei das Filtermedium (43) im Allgemeinen flachförmig ausgebildet ist und, von oben oder von unten betrachtet, eine quadratische oder rechteckige Form mit abgerundeten Ecken aufweist.

7. Staubfilter nach einem der vorhergehenden Ansprüche, wobei die erste Armatur aus Polyoxymethylen gefertigt ist.

8. Staubfilter nach einem der vorhergehenden Ansprüche, wobei es sich bei dem Filtermedium um ein Polyestermedium handelt.

9. Einrohrgaszähler (1), umfassend ein Messmodul (20) zur Durchflussmessung eines Gases sowie einen sich stromaufwärts des Messmoduls erstreckenden Einlasskanal (41) und einen sich stromabwärts des Messmoduls erstreckenden Auslasskanal (42), wobei sich der Einlasskanal und der Auslasskanal durch ein und dieselbe erste Ebene (P1) erstrecken, wobei der Zähler ferner einen Staubfilter (40) nach einem der vorhergehenden Ansprüche umfasst, wobei der Staubfilter derart in dem Zähler eingebaut ist, dass die erste Ebene mit der zweiten Ebene zusammenfällt.

10. Zähler nach Anspruch 9, wobei die erste Ebene (P1) eine horizontale Ebene ist.

11. Zähler nach einem der Ansprüche 9 oder 10, wobei der Zähler einen Behälter (14) mit einer ersten Kammer (15) und einer zweiten Kammer (16) umfasst, wobei es sich bei der ersten Kammer um eine obere Kammer und bei der zweiten Kammer um eine untere Kammer handelt, wenn der Zähler in einer Nennposition eingebaut ist, wobei der Zähler ferner eine Verbindungsvorrichtung (5) mit einem Gaseinlass und einem Gasauslass umfasst, wobei der Gaseinlass in die erste Kammer (15) mündet, wobei sich das Messmodul (20) in der zweiten Kammer befindet, wobei der Staubfilter (40) die erste Kammer und die zweite Kammer voneinander trennt.

12. Zähler nach Anspruch 11, ferner umfassend ein Befestigungsendstück (38), das dazu dient, den Staubfilter (40) in Position zu halten, wobei der Zähler ferner ein Verbindungsrohr (28) umfasst, das die erste Kammer (15) mit der zweiten Kammer (16) in Fluidverbindung setzt, wobei der Staubfilter derart eingebaut ist, dass sich das Verbindungsrohr durch die Öffnung (44) hindurch erstreckt, wobei das Befestigungsendstück in das Verbindungsrohr eingesetzt ist und zumindest eine Dichtung (39) umfasst, die derart ausgelegt ist, dass sie ein Einströmen von ungefiltertem Gas aus der ersten Kammer (15) über einen Strömungspfad zwischen dem Befestigungsendstück und dem Verbindungsrohr in die zweite Kammer (16) verhindert.

13. Zähler nach Anspruch 12, wobei der Zähler ferner eine Gasmischkammer (21) umfasst, wobei es sich bei dem Verbindungsrohr um ein Auslassrohr der Gasmischkammer (21) handelt.

14. Zähler nach einem der Ansprüche 9 bis 13, wobei das Messmodul (20) einen Messkanal (30) umfasst, in welchem das Gas zirkuliert, wobei der Messkanal vertikal positioniert ist, wenn der Zähler in seiner Nennposition eingebaut ist.

15. Zähler nach einem der Ansprüche 9 bis 14, wobei das Messmodul (20) einen Messkanal (30) umfasst, in welchem das Gas zirkuliert, wobei der Zähler ferner einen Zusatzkanal (56) umfasst, der eine ähnliche Form und ähnliche Abmessungen wie der Messkanal (30) aufweist und parallel zu diesem Messkanal angeordnet ist, wobei der Zusatzkanal (56) derart ausgelegt ist, dass ein Teil des in der zweiten Kammer (16) in Richtung des Gasauslasses zirkulierenden Gases durch den Zusatzkanal strömt, wodurch sich der Gasdurchfluss durch den Messkanal verringert.

16. Zähler nach den Ansprüchen 13 und 15, wobei der Messkanal und der Zusatzkanal in die Gasmischkammer (21) münden.

17. Zähler nach einem der Ansprüche 9 bis 16, umfassend einen Staubfilter (40) nach Anspruch 7, wobei der Zähler eine Verarbeitungseinheit (31) umfasst, die dafür ausgelegt ist, eine Druckdifferenz zwischen einem ersten Druckmesswert, der von dem ersten Drucksensor (61) erzeugt wird, und einem zweiten Druckmesswert, der von dem zweiten Drucksensor (62) erzeugt wird, mit einem Referenzschwellenwert zu vergleichen und eine Alarmmeldung zu erzeugen, wenn die Druckdifferenz besagten Referenzschwellenwert übersteigt.

## Claims

1. Dust filter (40), arranged to be installed in a single-tube gas meter (1) which comprises a measuring module (20) arranged to measure a flow rate of a gas, as well as an inlet channel (41) which extends upstream from the measuring module and an outlet channel (42) which extends downstream from the measuring module, the inlet channel and the outlet channel passing through one same first plane (P1),
the dust filter comprising a filtering medium (43) wherein a hole (44) is made, a cross-section of the filtering medium and a cross-section of the hole, along a second plane (P2) perpendicular to a thickness (e) of the filtering medium, respectively having for shapes, a shape of a cross-section of the inlet channel and a shape of a cross-section of the outlet channel along the first plane,
the dust filter (40) thus being arranged such that, when it is installed in the meter (1), such that the first plane coincides with the second plane, the gas, before entering into the measuring module, passes into the inlet channel through the filtering medium, and after exiting from the measuring module, passes into the outlet channel through the hole,
the dust filter further comprising at least one generally flat first frame (46), which is positioned against a first face (47) of the filtering medium by being fixed to it,
the first face (47) being a lower face of the filtering medium (43) when the dust filter (40) is installed in the meter, **characterized in that** the dust filter further comprises a magnet (60) positioned on the first frame and arranged to attract metal dust particles.

2. Dust filter according to claim 1, wherein the hole (44) is positioned in a central portion of the filtering medium (43).

3. Dust filter according to one of the preceding claims, wherein a contour of the first frame (46) has one same shape as a contour of the filtering medium (43), a width and a length of the filtering medium being greater than a width and a length of the first frame.

4. Dust filter according to one of the preceding claims, comprising at least one first pressure sensor (61) which is positioned on the first frame (46).

5. Dust filter according to claim 4, further comprising a second generally flat frame (48), which is positioned against a second face (49) of the filtering medium by being fixed to it, the dust filter further comprising at least one second pressure sensor (62) which is positioned on the second frame (48).

6. Dust filter according to one of the preceding claims, the filtering medium (43) having a generally flat shape and has, when it is seen from above or below, a square or rectangular shape having rounded corners.

7. Dust filter according to one of the preceding claims, the first frame being made of polyoxymethylene.

8. Dust filter according to one of the preceding claims, the filtering medium being a polyester medium.

9. Single-tube gas meter (1) comprising a measuring module (20) arranged to measure a flow rate of a gas, as well as an inlet channel (41) which extends upstream from the measuring module and an outlet channel (42) which extends downstream from the measuring module, the inlet channel and the outlet channel passing through one same first plane (P1), the meter further comprising a dust filter (40) according to one of the preceding claims, the dust filter being installed in the meter, such that the first plane coincides with the second plane.

10. Meter according to claim 9, the first plane (P1) being a horizontal plane.

11. Meter according to one of claims 9 or 10, the meter comprising a tank (14) comprising a first chamber (15) and a second chamber (16), the first chamber being an upper chamber and the second chamber being a lower chamber when the meter is installed in a nominal position, the meter in addition comprising a connecting device (5) comprising a gas inlet and a gas outlet, the gas inlet opening into the first chamber (15), the measuring module (20) being located in the second chamber, the dust filter (40) separating the first chamber and the second chamber.

12. Meter according to claim 11, further comprising a fixing nozzle (38) arranged to hold the dust filter (40) in position, the meter in addition comprising a connecting conduit (28) which fluidically connects the first chamber (15) to the second chamber (16), the dust filter being installed such that the connecting conduit extends through the hole (44), the fixing nozzle being inserted into the connecting conduit and comprising at least one seal (39) arranged to avoid the non-filtered gas passing from the first chamber (15) to the second chamber (16) through a path located between the fixing nozzle and the connecting conduit.

13. Meter according to claim 12, the meter further comprising a gas mixing enclosure (21), the connecting conduit being an outlet conduit of the gas mixing enclosure (21).

14. Meter according to one of claims 9 to 13, wherein the measuring module (20) comprises a measuring conduit (30), wherein the gas circulates, the measuring conduit being positioned vertically when the meter is installed in its nominal position.

15. Meter according to one of claims 9 to 14, wherein the measuring module (20) comprises a measuring conduit (30) wherein the gas circulates, the meter in addition comprising an additional conduit (56), having a shape and dimensions similar to those of the measuring conduit (30), and being disposed parallel to the measuring conduit, the additional conduit (56) being arranged such that a portion of the gas which circulates in the second chamber (16) to the gas outlet, passes through the additional conduit, which makes it possible to reduce a flow rate of gas circulating in the measuring conduit.

16. Meter according to claims 13 and 15, wherein the measuring conduit and the additional conduit open into the gas mixing enclosure (21).

17. Meter according to one of claims 9 to 16, comprising a dust filter (40) according to claim 7, the meter comprising a processing unit (31) arranged to compare, with a reference threshold, a pressure difference between a first pressure measurement produced by the first pressure sensor (61) and a second pressure measurement produced by the second pressure sensor (62), and to produce an alarm message if the pressure difference is greater than said reference threshold.
